# EUROPÄISCHE PATENTSCHRIFT

(11) **EP 3 086 144 B1**
(45) Veröffentlichungstag und Bekanntmachung des Hinweises auf die Patenterteilung: **08.02.2023**
(21) Anmeldenummer: 16166261.4
(22) Anmeldetag: 20.04.2016
(51) Int. Cl.: G02B 6/02, G02B 6/26, F21V 8/00

(54) **FASEROPTISCHE VORRICHTUNG UND VERFAHREN ZUR HERSTELLUNG EINER SOLCHEN**
FIBRE OPTIC DEVICE AND METHOD FOR MANUFACTURING THE SAME
DISPOSITIF A FIBRES OPTIQUES ET SON PROCEDE DE FABRICATION

(30) Priorität: 24.04.2015 DE 102015207611
(43) Veröffentlichungstag der Anmeldung: 26.10.2016
(73) Patentinhaber: LEONI Kabel GmbH, 91154 Roth (DE)
(72) Erfinder: AGANOGLU, Ruzin, 12167 Berlin (DE); ARENDT, Holger, 15834 Rangsdorf (DE); HEINZE, Alexander, 13086 Berlin (DE); KURT, Benno, 16356 Eiche (DE)
(74) Vertreter: Eisenführ Speiser

(56) Entgegenhaltungen:
- WO-A1-2013/191690
- WO-A1-2014/020844
- DE-A1-102011 119 662
- GB-A- 2 447 936
- US-A1- 2015 029 741
- US-B1- 6 299 338
- US-B1- 6 563 993

## Beschreibung

Die Erfindung betrifft eine faseroptische Vorrichtung und ein Verfahren zur Herstellung einer solchen Vorrichtung. Die faseroptische Vorrichtung wird insbesondere auch als Diffusor bezeichnet.

Die faseroptische Vorrichtung dient vorrangig der Abstrahlung von Licht in einen bestimmten Raumbereich und wird regelmäßig zur Bestrahlung im Rahmen medizinischer Verfahren angewendet, beispielsweise zur thermischen Behandlung oder Ablation von Gewebe, insbesondere innerhalb des Körpers, bei alternativen Anwendungen auch außerhalb des Körpers.

Allgemein umfasst die Vorrichtung eine optische Faser, in welche Licht an einem ersten Ende eingekoppelt wird, welches üblicherweise mit einer Lichtquelle verbunden ist. Das eingekoppelte Licht wird zunächst in Längsrichtung der Faser zu einem zweiten, distalen Ende geführt und an geeigneter Stelle in einem Diffusorabschnitt in radialer Richtung aus der Faser ausgekoppelt, typischerweise am distalen Ende oder in dessen Nähe. Dazu muss an dieser Stelle die Faser entsprechend präpariert sein, um die zur Lichtleitung üblicherweise ausgenutzte Totalreflexion innerhalb der Faser zu reduzieren und stattdessen zumindest einen Teil des Lichts in radialer Richtung auszukoppeln.

Beispielsweise ist es aus der US 2009/0210038 A1 bekannt, Streupartikel in die Faser einzubetten, welche das in der Faser geführte Licht derart streuen, dass der Winkel der Totalreflexion unterschritten wird und somit in verstärktem Maße in radialer Richtung Licht aus der Faser ausgekoppelt wird.

In der WO 2013/191690A1 wird eine langgestreckte Leuchtvorrichtung zur Nachahmung einer Leuchtstofflampe zur Beleuchtung beschrieben. Die Leuchtvorrichtung umfasst ein Leuchtrohr, mit einer Seitenwand, auf welcher ein Lichtextraktionsmittel aufgetragen ist. Das Lichtextraktionsmittel umfasst Herabsetzmittel zur Konvertierung von Licht und Streumittel zur Extraktion von Licht.

Ausgehend hiervon ist es eine Aufgabe der Erfindung, eine verbesserte faseroptische Vorrichtung anzugeben, die im Betrieb in einem Diffusorabschnitt eine möglichst homogene Lichtabstrahlung gewährleistet. Desweiteren soll ein möglichst einfaches Verfahren zur Herstellung der Vorrichtung angegeben werden.

Die Aufgabe wird erfindungsgemäß gelöst durch eine faseroptische Vorrichtung mit den Merkmalen gemäß Anspruch 1. Vorteilhafte Ausgestaltungen, Weiterbildungen und Varianten sind Gegenstand der Unteransprüche.

Die faseroptische Vorrichtung ist insbesondere für Medizinanwendungen geeignet. Die Vorrichtung weist eine optische Faser auf, die sich in einer Längsrichtung zu einem distalen Ende hin erstreckt und einen Kern aufweist. Weiterhin weist die Faser einen Diffusorabschnitt auf, in welchem eine Anzahl von insbesondere makroskopischen Streuelementen angeordnet ist, welche jeweils in den Kern hineinragen, zur radialen Auskopplung von Licht.

Die mit der Erfindung erzielten Vorteile bestehen insbesondere darin, dass die Streuelemente zum Einen besonders einfach herstellbar sind, vorzugsweise mittels eines Laserbearbeitungsverfahrens, und zum Anderen eine besonders kontrollierte Abstrahlung von Licht in radialer Richtung ermöglichen. Die Streuelemente weisen dabei insbesondere jeweils eine makroskopische Ausdehnung auf, wobei unter "makroskopisch" insbesondere verstanden wird, dass die Ausdehnung oder Größe eines einzelnen Streuelements deutlich größer ist als die Wellenlänge des im Kern geführten Lichts, vorzugsweise um etwa 1 bis 4 Größenordnungen, insbesondere um etwa 2 bis 3 Größenordnungen. Die Streuelemente bilden dabei mit dem Kern Grenzflächen aus, welche derart orientiert sind, dass eintreffendes Licht in einem Winkelbereich eintrifft, welcher nicht die Bedingung zur Totalreflexion erfüllt. An diesen Grenzflächen erfährt das im Kern der Faser geführte Licht eine Umlenkung oder auch Streuung, wodurch ein im Vergleich zu einer Faser ohne Streuelemente größerer Anteil von Licht in radialer Richtung, d.h. quer zur Längsrichtung aus der Faser und in die Umgebung derselben ausgekoppelt wird. Die Streuelemente bilden dann aufgrund der Grenzfläche und deren lichtbrechender Eigenschaft auf vorteilhafte Weise insbesondere jeweils eine Art Mikrolinse.

Durch geeignete Ausgestaltung der Streuelemente hinsichtlich deren Abmessungen, Geometrie und Lage bezüglich der Faser, wird weiterhin eine besonders homogene Abstrahlung im Sinne einer besonders gleichmäßigen, insbesondere konstanten Intensitätsverteilung erzielt. Die Streuelemente sind dabei insbesondere als einzelne, diskrete und über die Oberfläche, d.h. die Faseroberfläche, verteilte Einbuchtungen, Taschen oder auch Kerben ausgebildet. Die Oberfläche der Faser ist daher im Diffusorabschnitt insbesondere strukturiert.

Besonders aufgrund der homogenen radialen Lichtemission auf dem Diffusorabschnitt, wird die Vorrichtung insgesamt insbesondere auch als Diffusor bezeichnet. Im Betrieb wird dann an einem ersten Ende der Faser Licht von einer Lichtquelle aus eingekoppelt. Dazu ist am ersten Ende, das auch als proximales Ende oder Einkoppelende bezeichnet wird, insbesondere eine geeignete Kupplung oder Steckverbindung vorgesehen und vorzugsweise auch angebracht, über welche die Faser an die Lichtquelle anschließbar ist. Die Lichtquelle ist vorzugsweise ein Laser oder alternativ eine Lampe und weist insbesondere eine Zentralwellenlänge im Bereich von 400 bis 2300 nm auf. Die Faser weist typischerweise einen Durchmesser im Bereich von 125 bis 1500µm und insbesondere im Bereich von 500 bis 700µm auf.

Das in die Faser eingekoppelte Licht propagiert zunächst in Längsrichtung vom ersten Ende zu einem zweiten Ende der Faser, welches auch als distales Ende oder Auskoppelende bezeichnet wird. Bis zum Diffusorabschnitt ist die Faser daher auf einem Normalabschnitt oder einem Zuleitungsabschnitt zweckmäßigerweise als herkömmliche Faser zur Lichtführung mittels Totalreflexion ausgebildet und weist dazu insbesondere einen den Kern umgebenden Mantel mit geringerem Brechungsindex auf.

Vorzugsweise ist die Faser aus Quarzglas gefertigt, wobei der Mantel aus fluoriertem Quarzglas hergestellt ist. In einer geeigneten Alternative ist lediglich der Kern aus Quarzglas gefertigt und von einem Mantel aus einem Polymer umgeben, z.B. einem Fluorpolymer. Die Faser ist dann insbesondere eine sogenannte PCS-Faser, d.h. plastic clad silica Faser oder HPCS Faser, d.h. hard plastic clad silica Faser. Grundsätzlich ist auch eine vollständig aus einem Polymer gefertigte Faser, eine sogenannte polymer-optische Faser, kurz POF, geeignet.

An den Normalabschnitt schließt sich in Längsrichtung der Diffusorabschnitt an, welcher vorzugsweise endseitig an der Faser angeordnet ist und somit dann auch einen Endabschnitt derselben bildet. Der Diffusorabschnitt ist vorzugsweise einige Zentimeter bis einige zehn Zentimeter und insbesondere etwa 1 bis 30cm oder 1 bis 10cm lang. Die Vorrichtung eignet sich dann besonders zur intra-korporalen medizinischen Anwendung, beispielsweise zur Ablation von Tumorgewebe oder Verkalkungen an Gefäßinnenwänden.

Die Streuelemente dienen insbesondere der Störung der herkömmlichen Lichtleitung mittels Totalreflexion und erzeugen dadurch auf dem Diffusorabschnitt vorteilhaft ein erhöhtes Maß an Lichtstreuung und Auskopplung aus der Faser. Dieser Effekt wird wesentlich durch Grenzflächen der Streuelemente erzeugt, welche ausgehend von der Oberfläche der Faser durch einen etwaigen Mantel hindurch und bis in den Kern hineinragen.

Vorliegend werden bei der Herstellung der Vorrichtung zur Ausbildung der Streuelemente eine herkömmliche Faser im Bereich der herzustellenden Streuelemente insbesondere zerstört und dabei Fasermaterial abgetragen, sodass dann eine entsprechende Ausnehmung in die Faser eingebracht wird. Die Streuelemente weisen in dieser Ausgestaltung also jeweils eine Ausnehmung auf. Diese Ausnehmung ist zunächst insbesondere mit Luft gefüllt, sodass sich eine Grenzfläche mit entsprechendem Brechungsindexunterschied zwischen Ausnehmung und Kern bildet. Der Verlauf dieser Grenzfläche unterscheidet sich dabei in vorteilhafter Weise stark von dem generell in Längsrichtung gerichteten Verlauf der Grenzschicht zwischen Kern und Mantel, wodurch das im Kern geführte Licht in entsprechend anderem Winkel auf diese neu geschaffene Grenzschicht trifft.

In einer grundsätzlich denkbaren Variante sind die Streuelemente jeweils als eine Region des Kerns mit verändertem Brechungsindex ausgebildet. Insbesondere sind die jeweiligen Regionen dabei räumlich voneinander getrennt. Durch diese lokale Brechungsindexänderung innerhalb des Kerns werden dann in vorteilhafterweise Grenzschichten zwischen dem unbeeinflussten Teil des Kern und einer jeweiligen Region gebildet, welche eine Umlenkung des im Kern geführten Lichts wie oben bereits im Zusammenhang mit den Ausnehmungen beschrieben zur Folge haben. Dadurch wird der Anteil an Licht, welches aus der Faser herausgestreut wird, beträchtlich erhöht.

Zur Erzeugung eines veränderten Brechungsindex sind prinzipiell verschiedene Verfahren geeignet. Ein erstes Verfahren umfasst eine Bearbeitung der Faser mit Laserstrahlung, durch welche vorzugsweise eine lokale Erwärmung der Faser erzielt wird, sodass sich die Materialstruktur und somit der Brechungsindex des Kerns in der bestrahlten Region ändert. Der Kern wird quasi lokal, d.h. an den Stellen der späteren Streuelemente, auf- oder angeschmolzen. Die Faser weist dann als Streuelemente jeweils thermisch, insbesondere mittels eines Lasers behandelte Regionen des Kerns auf. Die Laserbearbeitung ist somit vorzugsweise im Wesentlichen eine thermische Bearbeitung. Besonders geeignet ist hierzu beispielsweise ein CO₂-Laser. Bei einem zweiten Verfahren zur Brechungsindexänderung erfolgt dagegen eine lokale Ionenimplantation, zur Ausbildung der Regionen mit verändertem Brechungsindex. Die Faser weist dann entsprechend Streuelemente auf, die aus dem Kern unter Zugabe von Ionen eines zusätzlichen Materials gefertigt sind.

Um die Streuung von Licht weiter zu verbessern ist auf die Faser zumindest bereichsweise ein Streumaterial aufgebracht, welches eine Matrix mit darin eingebetteten Streupartikeln aufweist, insbesondere im Bereich der Streuelemente. Dabei dienen die Streupartikel zur Streuung von Licht. Das aus der Faser ausgekoppelte Licht wird dann vorteilhaft von den Streupartikeln zusätzlich gestreut, wodurch wiederum die Homogenität der Abstrahlung von Licht im Diffusorabschnitt verbessert ist. Da im Bereich der Streuelemente verstärkt eine Auskopplung von Licht erfolgt, ist die Anordnung des Streumaterials in diesem Bereich besonders sinnvoll.

Vorliegend sind die Ausnehmungen mit dem Streumaterial ausgefüllt, insbesondere vollständig. Dadurch wird das über die Grenzfläche einer jeweiligen Ausnehmung in dieses gekoppelte Licht auf vorteilhafte Weise zusätzlich gestreut und somit ist die Abstrahlung von Licht insgesamt homogener. Zudem wird durch Ausfüllen der Ausnehmungen mit Material auf effektive Weise auch ein Eindringen von Schmutz oder Fremdkörpern verhindert und auch eine damit unter Umständen einhergehende Leistungsdegradation, beispielsweise aufgrund von Lichtabsorption.

In einer besonders bevorzugten Ausgestaltung ist die Faser durchgängig mit dem Streumaterial beschichtet, d.h. durchgängig auf dem Diffusorabschnitt und insbesondere nicht auf dem Normalabschnitt. Diese durchgängige Aufbringung des Streumaterials quasi als Streumantel, welcher die Faser im Bereich des Diffusorabschnitts umgibt, erzeugt zum Einen vorzugsweise eine besonders ebene Oberfläche der Faser, d.h. insbesondere einen konstanten Durchmesser der Faser, und zum Anderen auch eine besonders homogene Lichtabstrahlung sowohl im Bereich der Streuelemente als auch in den dazwischenliegenden, freien Bereichen. Ein durchgängiges Aufbringen des Streumaterials ist zudem herstellungstechnisch deutlich einfacher, als ein lediglich lokales Aufbringen. Bevorzugterweise wird das Streumaterial mit einer Wandstärke im Bereich von 1 bis 10µm aufgebracht.

Bevorzugterweise wird insbesondere vor dem Aufbringen des Streumaterials der Mantel der Faser zumindest auf dem Bereich entfernt, auf welchem anschließend das Streumaterial aufgebracht wird. Das Streumaterial wird also direkt auf den Kern aufgebracht. Das evaneszente Feld des im Kern geführten Lichts dringt dann direkt in den durch das Streumaterial gebildeten Streumantel ein, ohne von diesem zusätzlich durch den nun entfernten Mantel beabstandet zu sein. Auf diese Weise ist die Streuwirkung des Streumaterials deutlich verstärkt. Besonders bevorzugt ist dabei eine Faser, mit einem Mantel aus einem Polymer, da sich dieses das Streumaterial aufgebracht wird. Das Streumaterial wird also direkt auf den Kern aufgebracht. Das evaneszente Feld des im Kern geführten Lichts dringt dann direkt in den durch das Streumaterial gebildeten Streumantel ein, ohne von diesem zusätzlich durch den nun entfernten Mantel beabstandet zu sein. Auf diese Weise ist die Streuwirkung des Streumaterials deutlich verstärkt. Besonders bevorzugt ist dabei eine Faser, mit einem Mantel aus einem Polymer, da sich dieses besonders einfach entfernen lässt. Alternativ dient direkt eine Faser ohne Mantel als Ausgangsprodukt für die Herstellung der Vorrichtung.

Die Streupartikel sind vorzugsweise als Nanopartikel ausgebildet, d.h. insbesondere als Atomagglomerate mit einer räumlichen Ausdehnung von weniger als 1µm, also höchstens in der Größenordnung der Wellenlänge des zu streuenden Lichts und eher darunter. In einer bevorzugten Ausgestaltung weisen die Nanopartikel einen mittleren Durchmesser auf, der im Bereich von 10 bis 100nm liegt, besonders bevorzugt im Bereich von 20 bis 50nm, und sind somit insbesondere ein bis zwei Größenordnung kleiner als die Wellenlänge des zu streuenden Lichts. Bei der Streuung an diesen Nanopartikeln handelt es sich dann vorrangig insbesondere um Rayleigh-Streuung, wohingegen die Streuelemente größer dimensioniert sind als die Wellenlänge des Lichts und vornehmlich zu Mie-Streuung führen. Diese Kombination von bezüglich der Wellenlänge des Lichts mikroskopischen Nanopartikeln und makroskopischen Streuelementen als Streuzentren ergibt eine optimale Homogenisierung des von der Vorrichtung im Diffusorabschnitt abgestrahlten Lichts und führt zu einer besonders konstanten Intensitätsverteilung in Längsrichtung.

Als Nanopartikel eignen sich Partikel aus einem Metalloxid, besonders aus Aluminiumoxid, welches besonders kostengünstig ist und zudem auch vorteilhafte chemische Eigenschaften beim einbetten in die Matrix des Streumaterials aufweist. Die Matrix ist vorzugsweise durch ein Basismaterial gebildet, welches bezüglich des in der Faser geführten Lichts transparent ist, d.h. insbesondere eine Absorption von weniger als 10% aufweist. Bevorzugterweise ist die Matrix aus einem Material gefertigt, das zur Herstellung einer optisch wirksamen Faserbeschichtung geeignet ist, insbesondere ein Polymer, d.h. Plastik, zur Ausbildung der Faser als eine PCS-Faser, d.h. plastic clad silica Faser, oder als eine HPCS-Faser, d.h. hard plastic clad silica Faser. Insbesondere in Kombination mit einer Faser, bei der zumindest der Kern aus Quarzglas gefertigt ist, ergibt sich beim Ausfüllen der Ausnehmungen mit einem Streumaterial auf Basis eines Polymers eine besonders feste mechanische Verbindung. Aufgrund der hierbei ähnlichen Materialien entstehen zudem besonders wenig Fehlstellen an der Grenzschicht zwischen Kern und Ausnehmung, sodass eine übermäßige Absorption von Licht verhindert wird. Weiterhin wird dadurch vorteilhaft auch eine zu starke Erwärmung der Vorrichtung im Betrieb und eine damit möglicherweise einhergehende Beschädigung verhindert. Besonders bei den generell bevorzugt verwendeten Lichtintensitäten bei einer Leistung im Bereich von etwa 10W kann eine erhöhte Absorption von Licht in der Faser zu einer Beschädigung führen.

Geeigneterweise liegt der Anteil an Streupartikeln im gesamten Streumaterial im Bereich von einigen Vol.-%, bevorzugt im Bereich zwischen 1 bis 10 Vol.-% und insbesondere im Bereich von 2 bis 5 Vol.-%, speziell bei 3 Vol.-%. Dadurch ist eine geeignete Streuwirkung bei gleichzeitig optimaler Transparenz des Streumaterials insgesamt gewährleistet. Der verbleibende Anteil ist zweckmäßigerweise ausschließlich Basismaterial.

Vorzugsweise sind die Streuelemente kugelförmig ausgeführt, wodurch sich eine Grenzschicht ergibt, welche im Betrieb eine optimale Streuung von Licht zur Folge hat. Dabei wird unter kugelförmig insbesondere verstanden, dass ein jeweiliges Streuelement grundsätzlich eine gekrümmte Grenzschicht ausbildet, welche vorzugsweise einer gedachten Kugel oder allgemein einem Ellipsoid folgt, jedoch aufgrund der peripheren Lage nicht vollständig kugel- oder ellipsoid-förmig ist, sondern lediglich im Wesentlichen kugel- oder ellipsoid-förmig ist. Aufgrund der peripheren Lage weist das Streuelement üblicherweise eine Form auf, welche einer abgeschnittenen Kugel oder einem abgeschnittenen Ellipsoid entspricht. Das Streuelement wird sozusagen durch die begrenzte räumliche Ausdehnung der Faser in radialer Richtung beschnitten, sodass ein Teil der gedachten Kugel, allgemein des gedachten Ellipsoids, außerhalb der Faser liegt und das Streuelement z.B. zunächst als in radialer Richtung offene Kavität oder Hohlraum in der Faser ausgebildet ist. Dabei ist der abgeschnittene Teil der gedachten Kugel vorzugsweise deutlich kleiner als das tatsächliche Streuelement. Mit anderen Worten: in radialer Richtung gemessen weist das Streuelement einen Durchmesser auf, welcher aufgrund der peripheren Lage geringer ist als eine Kugeldurchmesser der gedachten Kugel, welcher die Grenzschicht folgt, wobei der Durchmesser wenigstens 50% und vorzugsweise wenigstens 75%, besonders bevorzugt wenigstens 90% des Kugeldurchmessers beträgt.

Die Streuelemente werden allgemein bevorzugt durch eine punktuelle Bearbeitung mit einem Laserstrahl erzeugt. Alternativ zu solchen eher punktuellen, im Wesentlichen kugelförmigen Streuelementen, sind diese langgestreckt, beispielsweise als Kerben ausgebildet. In einer anderen geeigneten Alternative sind die Streuelemente als geschlossene, radial angeordnete Ringe ausgebildet und wirken somit dann insbesondere nach Art einer Zylinderlinse.

Die Streuelemente weisen vorzugsweise eine Ausdehnung im Bereich von 20 bis 500µm auf, insbesondere im Bereich von 150 bis 300µm. Bei einem im Wesentlichen kugelförmigen Streuelement entspricht die Abmessung dann dem Durchmesser der Kugel. Im Falle von langgestreckten Streuelementen, beispielsweise Kerben, entspricht die Ausdehnung einer Längsausdehnung, d.h. insbesondere der längsten Ausdehnung. Das Streuelement ist also bezüglich der Wellenlänge des Lichts insbesondere um etwa ein bis zwei Größenordnungen größer und weist somit makroskopische Ausmaße auf. Im Vergleich zur Faser beträgt die Ausdehnung dann vorzugsweise etwa ein Zehntel bis die Hälfte des Durchmessers der Faser. Dieser liegt im Bereich von 125 bis 1500µm, insbesondere im Bereich von 500 bis 700µm.

Bei einer Faser mit einem den Kern umgebenden Mantel, der auch als cladding bezeichnet wird, weist der Kern einen Kerndurchmesser auf und der Mantel eine Mantelstärke, welche beispielsweise wenigstens ein Zwanzigstel und höchstens der Hälfte des Kerndurchmessers entspricht. Eine typische geeignete Faser weist beispielsweise einen Kerndurchmesser vom 600µm und eine Mantelstärke von 30µm auf, also einen Faserdurchmesser von 660µm. Das Verhältnis von Manteldurchmesser, das heißt Durchmesser mit Mantel, also insbesondere Faserdurchmesser, zum Kerndurchmesser wird auch als CCDR, genauer gesagt als cladding-to-core-diameter-ratio angegeben. Der hier beschriebene Diffusorabschnitt ist dabei unabhängig von einem speziellen CCDR-Wert. Vorzugsweise weist die Faser jedoch einen CCDR-Wert im Bereich von 1,04 bis 9,8, insbesondere im Bereich von 1,04 bis 2,5 auf.

Die Streuelemente ragen in radialer Richtung mit einer bestimmten Tiefe in die Faser hinein. Die Tiefe wird dabei in radialer Richtung, d.h. senkrecht zur Längsrichtung gemessen. Aufgrund der oben erwähnten peripheren Lage ist die Tiefe insbesondere im Fall von kugelförmigen Streuelementen entsprechend geringer als die Ausdehnung der Streuelements in Längsrichtung. Geeigneterweise weist das Streuelement eine Tiefe im Bereich von 15 bis 450µm auf, insbesondere im Bereich von 100 bis 250µm. Besonders bei einem Streuelement mit Ausnehmung ist auf diese Weise eine besonders gute Zugänglichkeit zwecks Ausfüllen mit Streumaterial erzielt, die Ausnehmungen weisen also insbesondere auf der Faseroberfläche eine hinreichend große Öffnung oder Apertur zur Befüllung auf.

Für eine besonders homogene, d.h. diffuse Lichtabstrahlung ist die Verteilung der Streuelemente entlang des Diffusorabschnitts von besonderer Bedeutung. Zur gleichmäßigen Abstrahlung von Licht in radialer Richtung sind daher die Streuelemente zweckmäßigerweise in Umfangsrichtung sowie in Längsrichtung der Faser verteilt angeordnet. Durch die verteilte Anordnung in Umfangsrichtung wird eine besonders gleichmäßige Abstrahlung in radialer Richtung erzielt; durch die verteilte Anordnung in Längsrichtung entsprechend eine besonders gleichmäßige Abstrahlung entlang der Längsrichtung. In einer geeigneten Ausgestaltung sind dazu die Streuelemente derart um die Faser herum angeordnet, dass zwei benachbarte Streuelemente sowohl in Umfangsrichtung als auch in Längsrichtung zueinander versetzt angeordnet sind. In einer geeigneten Alternative sind jeweils zwei Streuelemente als Paar an gleicher Längenposition entlang der Längsrichtung gegenüberliegend angeordnet und das folgende Paar ist in Umfangsrichtung um beispielsweise 90° gedreht angeordnet.

Bei der Propagation von Licht durch den Diffusorabschnitt nimmt der in Richtung des distalen Endes weitergeführte Anteil an Licht aufgrund der radialen Abstrahlung deutlich ab. Um dennoch entlang des gesamten Diffusorabschnitts eine gleichmäßige Streuintensität in radialer Richtung zu gewährleisten, sind die Streuelemente zweckmäßigerweise in Längsrichtung mit variierenden Abständen zueinander beabstandet.

Vorzugsweise sind die Streuelemente in Längsrichtung mit Abständen im Bereich von 100 bis 1000pm zueinander beabstandet. Dadurch wird insbesondere ein optimales Maß an gestreuter Intensität relativ zu weitergeführter Intensität erzielt, besonders bei einem Diffusorabschnitt, dessen Länge, d.h. Diffusorlänge im oben bereits angegebenen, bevorzugten Bereich liegt.

Besonders bevorzugt ist dabei eine Ausgestaltung derart, dass die Abstände zum distalen Ende hin abnehmen, also zum distalen Ende hin ein immer größerer Anteil des noch geführten Lichts aus der Faser herausgestreut wird. Allgemein ist der Abstand zwischen zwei in Längsrichtung aufeinanderfolgenden Streuelementen zum distalen Ende hin um bevorzugterweise zumindest 1% bis höchstens 70%, insbesondere zumindest 5% bis höchstens 50%, insbesondere höchstens 30% reduziert. In einer geeigneten Ausführungsform ist der Abstand kontinuierlich, d.h. bereits bezüglich des jeweils vorhergehenden Abstands reduziert. In einer zweiten geeigneten Ausführungsform weist der Diffusorabschnitt dagegen mehrere Teilabschnitte auf, wobei auf einem jeweiligen Teilabschnitt die Streuelemente gleich voneinander beabstandet sind, der Abstand jedoch im darauffolgenden Teilabschnitt gegenüber dem Abstand des vorhergehenden Teilabschnitts verringert ist. Auf einem jeweiligen Teilabschnitt variiert der Abstand zwischen zwei Streuelementen jedoch nicht. Dadurch ist insbesondere die Fertigung des Diffusorabschnitts vereinfacht. Beispielsweise weist der Diffusorabschnitt drei Teilabschnitte auf, beispielsweise mit jeweils zehn Streuelementen, wobei der Abstand in Längsrichtung zwischen zwei benachbarten Streuelementen auf dem ersten Teilabschnitt 600µm beträgt, auf dem zweiten Teilabschnitt 550µm und auf dem dritten, insbesondere distalen Teilabschnitt lediglich 200µm.

Grundsätzlich ist abhängig von der Anwendung der Vorrichtung auch eine geeignete Ausführung derart denkbar, dass zwar eine gleichmäßige Lichtabstrahlung entlang der Längsrichtung erfolgt, nicht jedoch in radialer Richtung, d.h. die Streuelement sind lediglich in Längsrichtung geeignet verteilt, nicht jedoch in Umfangsrichtung. Eine solche Vorrichtung weist demnach eine radiale Vorzugsrichtung auf, strahlt umfangsmäßig also nur in einen bestimmten und begrenzten Winkelbereich ab. Eine solche Vorrichtung eignet sich besonders für Beleuchtungsanwendungen.

Besonders bei Verwendung der Vorrichtung in einem medizinischen Zusammenhang, insbesondere bei einer intra-korporalen Anwendung, ist die Faser und insbesondere auch der Streumantel geeigneterweise von einem Außenmantel umgeben, der bevorzugterweise aus einem biokompatiblen Material gefertigt ist. Der Außenmantel bildet insbesondere eine äußerste Schicht und Begrenzung der Vorrichtung zumindest auf dem Diffusorabschnitt und steht im Betrieb potentiell im Kontakt mit der Umgebung. Daher ist das Material zweckmäßigerweise unter diesem Gesichtspunkt ausgewählt, zugleich aber hinreichend transparent, um weiterhin eine Lichtabstrahlung in radialer Richtung zu gewährleisten.

Besonders bevorzugt ist eine Ausführungsform derart, dass der Außenmantel eine stirnseitig, d.h. am distalen Ende, geschlossene Glaskapillare ist, welche sich insbesondere durch ihre Biokompatibilität auszeichnet und sich zudem bei der Herstellung besonders fest mit einem Streumantel aus Kieselgel verbindet. Alternativ oder zusätzlich ist auch eine Metallbeschichtung, beispielsweise aus Gold vorgesehen, welche dann bevorzugt eine Schichtdicke von höchstens 500nm aufweist. Die Vorrichtung findet vorzugsweise Anwendung im Rahmen einer medizinischen Diagnose, einer medizinischen Behandlung, zur Beleuchtung oder zur Untersuchung oder Bearbeitung eines Bauteils oder Werkstücks oder allgemein bei einer Medizinanwendung oder Industrieanwendung. Aufgrund der lediglich geringen radialen Abmessung der Faser und der darum angeordneten funktionalen Mäntel und/oder Schichten ist die Vorrichtung besonders in einer Ausgestaltung als Endoskop oder im Sinne einer in einen Hohlraum einführbaren Sonde zur Untersuchung oder Behandlung besonders schwierig zugänglicher Stellen geeignet. Beispielsweise zur Ablation von Verkalkungen in einem Blutgefäß oder zur Bestrahlung von Darmtumoren. Die Verwendung der Vorrichtung insbesondere als Sonde ist jedoch nicht auf Medizinanwendungen beschränkt. Vielmehr eignet sich die

Vorrichtung auch für Industrieanwendungen. Eine solche Industrieanwendung und nicht-medizinische Anwendung ist beispielsweise die Überwachung eines Verbrennungsprozesses im Inneren eines Verbrennungsmotors. Zweckmäßigerweise umfasst die Vorrichtung zusätzlich eine je nach Anwendung geeignete Steuer- oder Kontrolleinheit, mit einem Anschluss für die Faser.

Die Aufgabe wird weiterhin gelöst durch ein Verfahren mit den Merkmalen gemäß Anspruch 15. Vorteilhafte Ausgestaltungen, Weiterbildungen und Varianten sind Gegenstand der Unteransprüche. Desweiteren gilt das oben bereits im Zusammenhang mit der Vorrichtung Gesagte sinngemäß auch für das Verfahren und umgekehrt.

Zur Herstellung der Vorrichtung wird zunächst eine insbesondere optische, d.h. zur Lichtleitung ausgebildete Faser bereitgestellt, in welche mittels eines Lasers eine Anzahl von Streuelementen eingebracht werden. Die Verwendung eines Lasers vereinfacht die Herstellung beträchtlich und führt zusätzlich zu einer besonders präzisen Ausbildung der Streuelemente. Bei der Laserbearbeitung wird Material der Faser insbesondere durch Ablation entfernt oder thermisch behandelt und auf diese Weise ein insbesondere im Wesentlichen kugelförmiges Streuelement erzeugt. Die Bearbeitung erfolgt vorzugsweise in radialer Richtung, sodass das Streuelement in peripherer Lage der Faser von deren Faseroberfläche ausgehend ins Innere, d.h. bis in den Kern hineinragt. Auf der Faseroberfläche wird dabei insbesondere eine Öffnung oder Apertur erzeugt, über welche das ablatierte Material entweicht und über welche das Streuelement anschließend zugänglich ist. Bevorzugterweise wird als Laser zur Bearbeitung ein CO₂-Laser verwendet, der eine besonders effiziente Bearbeitung ermöglicht, da dessen Laserstrahlung von der Faser, genauer gesagt dem Fasermaterial, besonders gut absorbiert wird.

In einer besonders einfachen Ausgestaltung wird der Laser gepulst oder pulsartig betrieben und relativ zur Faser verfahren, sodass sich entlang der Faser verteilt mehrere Einschussstellen ergeben, an denen jeweils ein Streuelement ausgebildet wird. Durch Drehung der Faser werden dann gleichzeitig oder in einer Alternative mehrere Streuelemente in Umfangsrichtung der Faser verteilt angeordnet.

Vorliegend wird auf die Faser zumindest bereichsweise ein Streumaterial aufgetragen. Außerdem werden die Streuelemente beim Auftragen des Streumaterials mit Streumaterial ausgefüllt.

Der Diffusorabschnitt und dessen Herstellung sind vorteilhaft unabhängig von der genauen Ausgestaltung der Faser, insbesondere deren CCDR sowie deren numerischer Apertur. Als Ausgangsfaser kann daher ein breites Spektrum von herkömmlichen Fasern verwendet und mit einem Diffusorabschnitt in oben beschriebener Weise versehen werden. Insbesondere das Herstellungsverfahren ist somit besonders flexibel.

Nachfolgend werden Ausführungsbeispiele der Erfindung anhand einer Zeichnung näher erläutert. Darin zeigen jeweils schematisch:
- Fig. 1: eine faseroptische Vorrichtung,
- Fig. 2: ein Streuelement der Vorrichtung,
- Fig. 3a: eine Variante einer Anordnung mehrerer Streuelemente in einer Frontansicht,
- Fig. 3b: die Anordnung gemäß Fig. 3a in einer Seitenansicht,
- Fig. 3c: eine weitere Variante einer Anordnung mehrerer Streuelemente,
- Fig. 4: die berechnete Lichtstreuung in radialer Richtung als Funktion der Position in Längsrichtung für eine Ausführungsform der Vorrichtung, und
- Fig. 5a bis d: Schritte eines Verfahrens zur Herstellung der Vorrichtung.

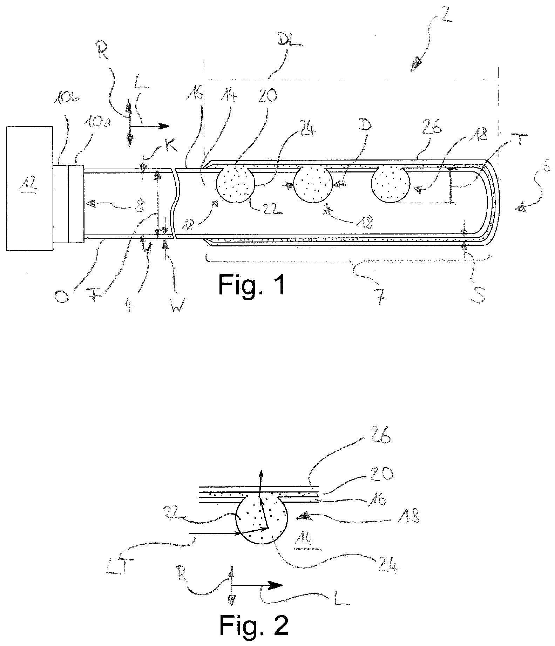

In Fig. 1 ist eine faseroptische Vorrichtung 2 dargestellt, die insbesondere als medizinisches Behandlungsgerät ausgebildet ist. Die Vorrichtung 2 umfasst eine Faser 4, welche an einem distalen Ende 6 einen Diffusorabschnitt 7 aufweist. Am anderen Ende, welches auch als Einkoppelende 8 bezeichnet wird, weist die Faser 4 ein erstes Kupplungselement 10a auf, mittels dessen die Faser 4 an ein zweites Kupplungselement 10b einer Steuereinheit 12 angeschlossen ist.

Die Faser 4 erstreckt sich in Längsrichtung L vom Einkoppelende 8 zum distalen Ende 6 und umfasst einen insbesondere zentralen Kern 14 sowie einen diesen umgebenden Mantel 16, zur Lichtleitung in Längsrichtung L mittels Totalreflexion an der Grenzschicht zwischen Kern 14 und Mantel 16. Der Diffusorabschnitt 7 ist endseitig der Faser 4 angeordnet und weist zusätzlich eine Anzahl von Streuelementen 18 auf, welche hier in Längsrichtung L verteilt angeordnet sind. Auf dem Diffusorabschnitt 7 ist zudem auf die Faser ein Streumaterial 20 aufgebracht, welches eine Vielzahl von Streupartikeln 22 enthält.

Dabei umfasst ein jeweiliges Streuelement 18 eine Ausnehmung 24, welche ausgehend von der Faseroberfläche O durch den Mantel 16 hindurch bis in den Kern 14 hineinragt. Die Ausnehmungen 24 sind hier im Wesentlichen kugelförmig ausgebildet und weisen eine bestimmte Ausdehnung D auf, welche hier dann dem Durchmesser einer gedachten Kugel entspricht. Die Ausnehmungen 24 weisen zudem in radialer Richtung R, d.h. senkrecht zur Längsrichtung L eine bestimmte Tiefe T oder auch Eindringtiefe in die Faser 4 auf, die aufgrund der in Fig. 1 besonders deutlich erkennbaren bezüglich der Faser 4 peripheren Lage der Ausnehmungen 24 entsprechend geringer ist als die Ausdehnung D. In dem hier gezeigten Ausführungsbeispiel beträgt die Ausdehnung D etwa 220µm und die Tiefe T etwa 200 µm. Die Faser 4 weist insgesamt einen Faserdurchmesser F auf, der hier etwa 660µm entspricht, wobei der Mantel 16 eine Wandstärke W von etwa 30µm aufweist, der Kern also einen Kerndurchmesser K von etwa 600µm. Der gesamte Diffusorabschnitt weist hier eine Diffusorlänge DL von etwa 5cm auf, wohingegen die gesamte Faser 4 deutlich länger ist und beispielsweise etwa 50cm, gemessen vom Einkoppelende 8 bis zum distalen Ende 6.

Das Streumaterial 20 ist hier durchgängig auf die Faser 4 aufgebracht, d.h. umschließt die Faser 4 auf dem Diffusorabschnitt 7 vollständig, insbesondere auf stirnseitig am distalen Ende 6. Auf diese Weise ist auf der Faseroberfläche O aus dem Streumaterial 20 ein Streumantel mit einer Schichtdicke S ausgebildet, die hier etwa 10µm beträgt. Das Streumaterial 20 ist in Fig. 1 zusätzlich von einem Außenmantel 26 umgeben, welcher hier ebenfalls lediglich auf dem Diffusorabschnitt 7 ausgebildet ist und einen äußersten Mantel der Vorrichtung 2 bildet. Der Außenmantel 26 ist hier mit Blick auf die medizinische Anwendung aus einem biokompatiblen Material gefertigt, bevorzugt Glas, da dieser Teil bei der Anwendung potentiell mit Gewebe in Berührung kommt.

Fig. 2 zeigt ausschnittsweise eines der Streuelemente 18 der Vorrichtung 2 und exemplarisch einen möglichen Strahlengang für das im Kern14 der Faser 4 in Längsrichtung L geführte Licht LT. Deutlich erkennbar ist die doppelte wirkweise des Streuelements 18 aufgrund der Ausgestaltung als mit Streumaterial 20 ausgefüllter Ausnehmung 24. Das auf die Grenzschicht zwischen Kern 14 und Ausnehmung 24 auftreffende Licht LT wird zunächst aufgrund des Brechungsindexunterschied der verwendeten Materialien in das Streuelement 18 sozusagen hineingebrochen und erfährt dort dann zusätzliche Streuung durch die im Streumaterial 20 eingebetteten Streupartikel 22. Auf diese Weise wird das Licht LT zumindest teilweise in radialer Richtung R aus der Faser 4 ausgekoppelt.

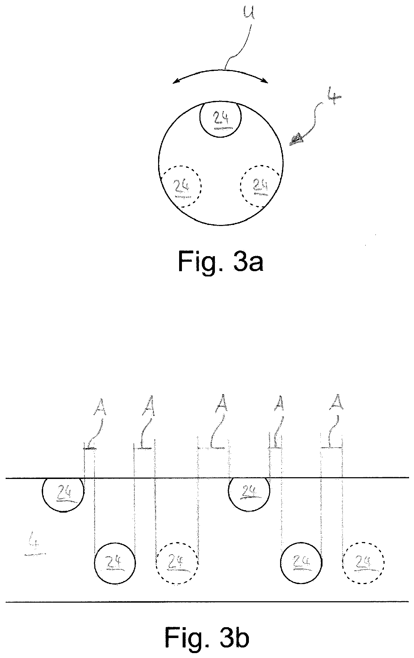

In den Fig. 3a und 3b ist stark vereinfacht eine geeignete Anordnung mehrerer Ausnehmungen 24 entlang des Diffusorabschnitts 7 dargestellt. Fig. 3a zeigt hierbei die Faser 4 in einer Frontalansicht. Deutlich erkennbar ist, dass die Ausnehmungen 24 in Umfangsrichtung U gleichmäßig verteilt angeordnet sind und zwar hier im Winkel von 120° zueinander versetzt. Fig. 3b zeigt die Faser 4 in einer Seitenansicht, aus welcher hervorgeht, dass die Ausnehmungen auch in Längsrichtung L verteilt angeordnet sind und zwar in einem Abstand A zueinander, der hier zudem in Längsrichtung L variiert. Insgesamt sind die Ausnehmungen 24 in dem in den Fig. 3a und 3b gezeigten Ausführungsbeispiel helixartig in Längsrichtung L angeordnet.

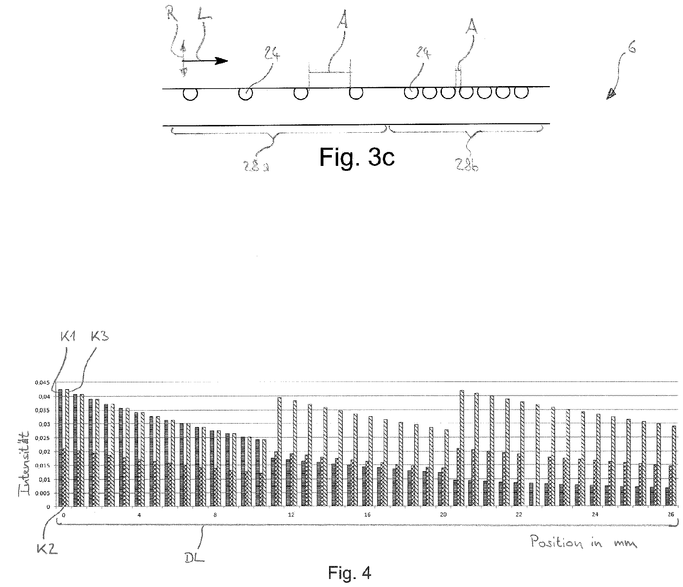

Fig. 3c zeigt eine alternative Anordnung mehrere Ausnehmungen 24 auf dem Diffusorabschnitt 7, wobei hier zwei Teilabschnitte 28a, 28b ausgebildet sind auf denen jeweils mehrere Ausnehmungen 24 angeordnet sind. Auf einem gegebenen Teilabschnitt 28a, 28b sind die Ausnehmungen 24 jeweils in gleichem Abstand A angeordnet, jedoch ist der Abstand A auf dem distalen Teilabschnitt 28b gegenüber dem Abstand A auf dem anderen Teilabschnitt 28a verringert. Auf dem distalen Teilabschnitt 28b ist die Intensität des Lichts LT aufgrund der auf dem Teilabschnitt 28a bereits erfolgten teilweisen Streuung verringert, sodass zur Erzielung einer gleichmäßigen Streuintensität in radialer Richtung R anteilig mehr Licht LT ausgekoppelt werden muss. Daher sind auf diesem distalen Teilabschnitt 28b die Ausnehmungen 24 mit höherer Dicht ausgebildet, sodass auch eine verstärkte Streuung erfolgt.

In Fig. 4 ist das Ergebnis einer Berechnung der zu erwartenden, in radialer Richtung R abgestrahlten Lichtintensität als Funktion der Position entlang der Längsrichtung L auf dem Diffusorabschnitt 7 gezeigt. Die Intensität ist dabei für drei unterschiedliche Konfigurationen K1, K2, K3 des Diffusorabschnitts 7 gezeigt und jeweils normiert. Die in einer jeweiligen Drei-Balken-Kombination links angeordnete erste Konfiguration K1 ist zum Vergleich lediglich eine Faser 4 ohne Streuelemente 18. Die Konfigurationen K2 und K3 zeigen dagegen die erwartete Abstrahlung für einen Diffusorabschnitt 7, der ähnlich wie das Beispiel in Fig. 3c mit mehreren, hier drei Teilabschnitten 28a, 28b ausgebildet ist, auf denen jeweils ein anderer Abstand A zwischen aufeinanderfolgenden Streuelementen 18 vorliegt. Die Konfiguration K2 zeigt das Ergebnis für eine Faser 4 , in welche lediglich Ausnehmungen 24 als Streuelemente 18 eingebracht sind, und ist in einer jeweiligen Drei-Balken-Kombination mittig gezeigt. Die verbleibende und jeweils rechts gezeigte dritte Konfiguration K3 zeigt dann die Abstrahlung als Funktion der Position für Streuelemente 18, bei denen die Ausnehmungen 24 zusätzlich mit Streumaterial 20 ausgefüllt sind. Deutlich erkennbar ist, dass in den Konfigurationen K2 und K3 im Vergleich zur Konfiguration K1 aufgrund der Streuelemente 18 über die gesamte Diffusorlänge DL des Diffusorabschnitts 7 eine homogenere Abstrahlung von Licht LT erzielt wird.

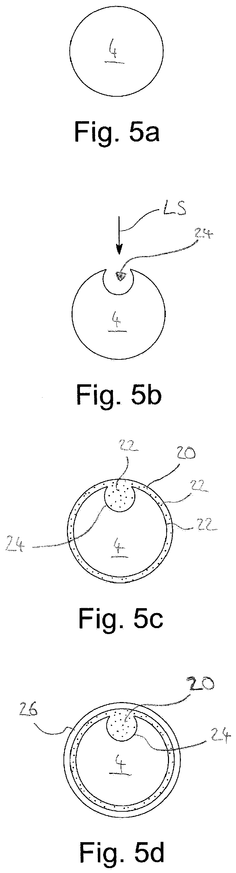

In den Fig. 5a bis 5d sind schließlich jeweils Schritte eines Verfahrens zur Herstellung der Vorrichtung 2, insbesondere des Diffusorabschnitts 7 durch Bearbeitung der Faser 4 gezeigt. Die Reihenfolge der Schritte im Verfahren entspricht dabei der Reihenfolge der Fig. 5a, 5b, 5c, 5d. Zunächst wird wie in Fig. 5a gezeigt eine Faser 4 bereitgestellt. Diese ist hier und in den folgenden Figuren in einer Frontansicht gezeigt. Fig. 5b zeigt das Einbringen einer Ausnehmung 24 mittels eines nicht näher gezeigten Lasers, dessen Laserstrahlung LS einen Teil der Faser 4 entfernt. Auf diese Weise wird eine hier etwa kugelförmige Ausnehmung 24 erzeugt.

Darauffolgend wird, wie in Fig. 5c gezeigt, auf die Faser 4 ein Streumaterial 20 aufgebracht, welches eine Matrix aus einem Basismaterial, vorzugsweise Kieselgel, umfasst, in welche Streupartikel 22, vorzugsweise Nanopartikel aus Aluminiumoxid, eingebettet sind. Fig. 5d zeigt dann, wie anschließend auf die gesamte Anordnung ein Außenmantel 26 aufgebracht wird, welcher hier den Diffusorabschnitt 7 vollständig umschließt und somit einen Kontakt des Streumaterials 20 mit der Umgebung verhindert.

## Patentansprüche

1. Faseroptische Vorrichtung (2), welche als eine Sonde ausgebildet ist, welche in einen Hohlraum einführbar ist, mit einer optischen Faser (4), die sich in einer Längsrichtung (L) zu einem distalen Ende (6) erstreckt und einen Kern (14) aufweist, und mit einem Diffusorabschnitt (7), in welchem eine Anzahl von Streuelementen (18) angeordnet ist,
**dadurch gekennzeichnet,**
**dass** die Streuelemente (18) jeweils in den Kern (14) hineinragen, zur radialen Auskopplung von Licht (LT),
wobei die Streuelemente (18) jeweils eine Ausnehmung (24) aufweisen, wobei die Ausnehmungen (24) auf der Faseroberfläche (O) eine Öffnung oder Apertur zur Befüllung aufweisen,
wobei auf die Faser (4) zumindest bereichsweise ein Streumaterial (18) aufgebracht ist, welches eine Matrix mit darin eingebetteten Streupartikeln (22), zur Streuung von Licht (LT), aufweist, und
wobei die Ausnehmungen (24) mit dem Streumaterial (20) ausgefüllt sind.

2. Vorrichtung (2) nach Anspruch 1,
wobei die Faser (4) durchgängig mit dem Streumaterial (20) beschichtet ist.

3. Vorrichtung (2) nach einem der Ansprüche 1 oder 2,
**dadurch gekennzeichnet,**
**dass** die Faser (4) einen den Kern (14) umgebenden Mantel (16) mit geringerem Brechungsindex aufweist und
**dass** die Streuelemente (18) ausgehend von einer Oberfläche (O) der Faser (4) durch den Mantel (16) hindurch bis in den Kern (14) hineinragen.

4. Vorrichtung (2) nach einem der vorhergehenden Ansprüche,
**dadurch gekennzeichnet,**
**dass** die Streuelemente (18) jeweils eine kugelförmige Ausnehmung (24) aufweisen.

5. Vorrichtung (2) nach einem der vorhergehenden Ansprüche,
**dadurch gekennzeichnet,**
**dass** die Streuelemente (18) jeweils als eine Region des Kern (14) mit verändertem Brechungsindex ausgebildet sind.

6. Vorrichtung (2) nach einem der vorhergehenden Ansprüche,
**dadurch gekennzeichnet,**
**dass** die Streupartikel (22) als Nanopartikel ausgebildet sind, die vorzugsweise einen mittleren Durchmesser im Bereich von 10 bis 100nm aufweisen, und/oder
**dass** das Streumaterial (20) wenigstens einen Anteil von 3 Vol.-% an Streupartikeln (22) aufweist.

7. Vorrichtung (2) nach einem der vorhergehenden Ansprüche,
**dadurch gekennzeichnet,**
**dass** die Faser eine PCS- oder HPCS-Faser ist.

8. Vorrichtung (2) nach einem der vorhergehenden Ansprüche,
**dadurch gekennzeichnet,**
**dass** die Ausnehmungen (24) insbesondere in Längsrichtung (L) eine Ausdehnung (D) im Bereich von 20 bis 500µm aufweisen und/oder
**dass** die Ausnehmungen (24) in radialer Richtung (R) jeweils eine Tiefe (T) im Bereich von 15 bis 450µm aufweisen.

9. Vorrichtung (2) nach einem der vorhergehenden Ansprüche,
**dadurch gekennzeichnet,**
**dass** die Ausnehmungen (24) im Diffusorabschnitt (7) in Umfangsrichtung (U) sowie in Längsrichtung (L) der Faser (4) verteilt angeordnet sind, zur gleichmäßigen Abstrahlung von Licht (LT) in radialer Richtung (R).

10. Vorrichtung (2) nach einem der vorhergehenden Ansprüche,
**dadurch gekennzeichnet,**
**dass** die Ausnehmungen (24) in Längsrichtung (L) mit Abständen (A) im Bereich von 100 bis 1000pm zueinander beabstandet sind.

11. Vorrichtung (2) nach einem der vorhergehenden Ansprüche,
**dadurch gekennzeichnet,**
**dass** die Ausnehmungen (24) in Längsrichtung (L) mit variierenden Abständen (A) zueinander beabstandet sind, zur gleichmäßigen Abstrahlung von Licht (LT) entlang der Längsrichtung (L), wobei die Abstände (A) zum distalen Ende (6) hin vorzugsweise abnehmen.

12. Vorrichtung (2) nach einem der vorhergehenden Ansprüche,
**dadurch gekennzeichnet,**
**dass** die Faser (4) von einem Außenmantel (26) umgeben ist.

13. Vorrichtung (2) nach dem vorhergehenden Anspruch,
**dadurch gekennzeichnet,**
**dass** der Außenmantel (26) eine stirnseitig geschlossene Glaskapillare ist.

14. Vorrichtung (2) nach einem der vorhergehenden Ansprüche,
**dadurch gekennzeichnet,**
**dass** diese ausgebildet ist für eine Anwendung aus einer Gruppe von Anwendungen umfassend: medizinische Diagnose, medizinische Behandlung, Beleuchtung und Untersuchung oder Bearbeitung eines Bauteils oder Werkstücks.

15. Verfahren zur Herstellung einer faseroptischen Vorrichtung (2) nach einem der vorhergehenden Ansprüche,
wobei zunächst eine Faser (4) bereitgestellt wird und in diese mittels eines Lasers eine Anzahl von Ausnehmungen (24) eingebracht wird, welche auf der Faseroberfläche (O) eine Öffnung oder Apertur zur Befüllung aufweisen, und
wobei anschließend auf die Faser (4) zumindest bereichsweise ein Streumaterial (20) aufgetragen wird und beim Auftragen des Streumaterials (20) die Ausnehmungen (24) mit Streumaterial (20) ausgefüllt werden.

## Claims

1. Fibre-optic device (2), which is embodied in the form of a probe that is insertable into a cavity, having an optical fibre (4) that extends in a longitudinal direction (L) to a distal end (6) and has a core (14), and having a diffuser section (7) in which a number of scattering elements (18) are arranged,
**characterized in that**
the scattering elements (18) each project into the core (14) for radially coupling out light (LT),
wherein the scattering elements (18) each have a cutout (24),
wherein the cutouts (24) have, on the fibre surface (O), an opening or aperture for filling,
wherein a scattering material (18) having a matrix with scattering particles (22) embedded therein for scattering light (LT) is applied at least regionally onto the fibre (4), and
wherein the cutouts (24) are filled with the scattering material (20).

2. Device (2) according to Claim 1,
wherein the fibre (4) is coated continuously with the scattering material (20).

3. Device (2) according to either of Claims 1 and 2,
**characterized**
**in that** the fibre (4) has a cladding (16) surrounding the core (14) and having a lower refractive index and
**in that** the scattering elements (18) project starting from a surface (O) of the fibre (4) through the cladding (16) into the core (14).

4. Device (2) according to any of the preceding claims,
**characterized**
**in that** the scattering elements (18) each have a spherical cutout (24).

5. Device (2) according to any of the preceding claims,
**characterized**
**in that** the scattering elements (18) are each in the form of a region of the core (14) having a changed refractive index.

6. Device (2) according to any of the preceding claims,
**characterized**
**in that** the scattering particles (22) are embodied in the form of nanoparticles which preferably have an average diameter in the range from 10 to 100 nm, and/or
**in that** the scattering material (20) has at least a proportion of 3% by volume of scattering particles (22).

7. Device (2) according to any of the preceding claims,
**characterized**
**in that** the fibre is a PCS or HPCS fibre.

8. Device (2) according to any of the preceding claims,
**characterized**
**in that** the cutouts (24) have an extent (D) in the range from 20 to 500 µm in particular in the longitudinal direction (L) and/or
**in that** the cutouts (24) have in each case a depth (T) in the range from 15 to 450 µm in the radial direction (R).

9. Device (2) according to any of the preceding claims,
**characterized**
**in that** the cutouts (24) are arranged in the diffuser section (7) distributed in the circumferential direction (U) and in the longitudinal direction (L) of the fibre (4), for uniformly emitting light (LT) in the radial direction (R).

10. Device (2) according to any of the preceding claims,
**characterized**
**in that** the cutouts (24) are arranged in the longitudinal direction (L) at mutual distances (A) in the range from 100 to 1000 µm.

11. Device (2) according to any of the preceding claims,
**characterized**
**in that** the cutouts (24) are arranged in the longitudinal direction (L) at varying distances (A) from one another, for uniformly emitting light (LT) along the longitudinal direction (L), wherein the distances (A) preferably decrease towards the distal end (6).

12. Device (2) according to any of the preceding claims,
**characterized**
**in that** the fibre (4) is surrounded by an outer cladding (26).

13. Device (2) according to the preceding claim,
**characterized**
**in that** the outer cladding (26) is a glass capillary that is closed at the end face.

14. Device (2) according to any of the preceding claims,
**characterized**
**in that** it is embodied for an application from a group of applications comprising: medical diagnosis, medical treatment, illumination and examination or processing of a component or a workpiece.

15. Method for producing a fibre-optic device (2) according to any of the preceding claims,
wherein initially a fibre (4) is provided and a number of cutouts (24), which have, on the fibre surface (O), an opening or aperture for filling, are placed into said fibre by means of a laser, and
wherein subsequently a scattering material (20) is applied at least regionally onto the fibre (4) and the cutouts (24) are filled with scattering material (20) during the application of the scattering material (20).

## Revendications

1. Dispositif à fibre optique (2), qui est réalisé sous la forme d'une sonde qui peut être introduite dans une cavité, avec une fibre optique (4) qui s'étend dans une direction longitudinale (L) jusqu'à une extrémité distale (6) et qui présente un noyau (14), et avec une section de diffuseur (7) dans laquelle sont agencés un certain nombre d'éléments de diffusion (18),
**caractérisé en ce que**
les éléments de diffusion (18) font saillie respectivement dans le noyau (14) pour la sortie radiale de lumière (LT),
dans lequel les éléments de diffusion (18) présentent respectivement un évidement (24),
dans lequel les évidements (24) présentent sur la surface de la fibre (O) un orifice ou une ouverture pour le remplissage,
dans lequel un matériau de diffusion (18) est appliqué au moins par zones sur la fibre (4), lequel présente une matrice dans laquelle sont noyées des particules de diffusion (22) pour la diffusion de lumière (LT), et
dans lequel les évidements (24) sont remplis avec le matériau de diffusion (20).

2. Dispositif (2) selon la revendication 1, dans lequel la fibre (4) est revêtue en continu avec le matériau de diffusion (20).

3. Dispositif (2) selon l'une quelconque des revendications 1 ou 2, **caractérisé en ce que** la fibre (4) présente une gaine (16) à faible indice de réfraction entourant le noyau (14) et
**en ce que** les éléments de diffusion (18) font saillie à partir d'une surface (O) de la fibre (4) à travers la gaine (16) jusque dans le noyau (14).

4. Dispositif (2) selon l'une quelconque des revendications précédentes, **caractérisé en ce que** les éléments de diffusion (18) présentent respectivement un évidement sphérique (24).

5. Dispositif (2) selon l'une quelconque des revendications précédentes, **caractérisé en ce que** les éléments de diffusion (18) sont respectivement réalisés sous la forme d'une région du noyau (14) ayant un indice de réfraction modifié.

6. Dispositif (2) selon l'une quelconque des revendications précédentes, **caractérisé en ce que** les particules de diffusion (22) sont réalisées sous forme de nanoparticules, qui présentent de préférence un diamètre moyen dans la plage allant de 10 à 100 nm, et/ou
**en ce que** le matériau de diffusion (20) présente au moins une proportion de 3 % en volume de particules de diffusion (22).

7. Dispositif (2) selon l'une quelconque des revendications précédentes, **caractérisé en ce que** la fibre est une fibre PCS ou HPCS.

8. Dispositif (2) selon l'une quelconque des revendications précédentes, **caractérisé en ce que** les évidements (24) présentent notamment dans la direction longitudinale (L) une extension (D) dans la plage allant de 20 et 500 µm et/ou
**en ce que** les évidements (24) présentent dans la direction radiale (R) respectivement une profondeur (T) dans la plage allant de 15 à 450 µm.

9. Dispositif (2) selon l'une quelconque des revendications précédentes, **caractérisé en ce que** les évidements (24) sont agencés dans la section de diffuseur (7) de manière répartie dans la direction périphérique (U) ainsi que dans la direction longitudinale (L) de la fibre (4), pour une émission uniforme de lumière (LT) dans la direction radiale (R).

10. Dispositif (2) selon l'une quelconque des revendications précédentes, **caractérisé en ce que** les évidements (24) sont espacés les uns des autres dans la direction longitudinale (L) à des distances (A) dans la plage allant de 100 à 1 000 µm.

11. Dispositif (2) selon l'une quelconque des revendications précédentes, **caractérisé en ce que** les évidements (24) sont espacés les uns des autres dans la direction longitudinale (L) à des distances (A) variables, pour une émission uniforme de lumière (LT) le long de la direction longitudinale (L), les distances (A) diminuant de préférence vers l'extrémité distale (6).

12. Dispositif (2) selon l'une quelconque des revendications précédentes, **caractérisé en ce que** la fibre (4) est entourée d'une gaine extérieure (26).

13. Dispositif (2) selon la revendication précédente, **caractérisé en ce que** la gaine extérieure (26) est un capillaire de verre fermé frontalement.

14. Dispositif (2) selon l'une quelconque des revendications précédentes, **caractérisé en ce que** celuici est réalisé pour une application dans un groupe d'applications comprenant: le diagnostic médical, le traitement médical, l'éclairage et l'examen ou l'usinage d'un composant ou d'une pièce.

15. Procédé de fabrication d'un dispositif à fibre optique (2) selon l'une quelconque des revendications précédentes, dans lequel une fibre (4) est tout d'abord fournie et un certain nombre d'évidements (24) sont pratiqués dans celle-ci au moyen d'un laser, lesquels présentent sur la surface de la fibre (O) un orifice ou une ouverture pour le remplissage, et
dans lequel un matériau de diffusion (20) est ensuite appliqué au moins par zones sur la fibre (4) et, lors de l'application du matériau de diffusion (20), les évidements (24) sont remplis de matériau de diffusion (20).
